# EUROPÄISCHE PATENTANMELDUNG

(11) **EP 2 708 764 A1**
(43) Veröffentlichungstag der Anmeldung: **19.03.2014**
(21) Anmeldenummer: 12184855.0
(22) Anmeldetag: 18.09.2012
(51) Int. Cl.: F16C 13/00, F16C 33/78

(54) **Umlenkrolle mit Verschlusskappe**

(71) Anmelder: Schwartz GmbH, 46509 Xanten/Ndrh. (DE)
(72) Erfinder: Bosmann, Karl-Heinz, 46509 Xanten (DE)
(74) Vertreter: Stenger, Watzke & Ring

(57) **Zusammenfassung**

Die Erfindung betrifft eine Umlenkrolle (1) für ein Zugmittel, mit einem Rad (2) , welches mittels eines Lagers (3) auf einer Achse (4) gelagert ist, wobei die Umlenkrolle (1) an einer oder beiden Stirnseiten eine Verschlusskappe (5) aufweist, welche mit einem radial inneren Randbereich (6) in einem Verbindungsbereich der Achse (4) angeordnet ist und mit einem radial äußeren Randbereich (7) in einem Verbindungsbereich des Rades (2) angeordnet ist. Um insbesondere das Lager (3) vor einem Eindringen von Schmutz zu schützen und das Austreten von Fett aus dem Lager (3) zu verhindern, schlägt die Erfindung vor, dass der radial äußere Randbereich (7) der Verschlusskappe (5) und der Verbindungsbereich des Rades (2) so zueinander formschlüssig korrespondierend ausgebildet sind, dass diese nach Art einer Schnappverbindung relativ zueinander fixierbar sind.

## Beschreibung

Die Erfindung betrifft eine Umlenkrolle für ein Zugmittel, mit einem Rad, welches mittels eines Lagers auf einer Achse gelagert ist, wobei die Umlenkrolle an einer oder beiden Stirnseiten eine Verschlusskappe aufweist, welche mit einem radial inneren Randbereich in einem Verbindungsbereich der Achse angeordnet ist und mit einem radial äußeren Randbereich in einem Verbindungsbereich des Rades angeordnet ist.

Umlenkrollen dieser Art werden unter anderem für den Antrieb von Aufzügen eingesetzt, wobei hohe Lasten auf die Umlenkrolle wirken. Um das Rad der Umlenkrolle dabei leichtgängig auf der feststehenden Achse drehen zu können, wird das zwischen Rad und Achse angeordnete Lager regelmäßig mit Fett geschmiert. Dabei besteht das Problem, dass während des Betriebs überschüssiges Fett austritt und den Aufzugsschacht bzw. das Dach des Aufzuges verschmutzt. Gleichzeitig ist der gefettete Lagerbereich anfällig für Schmutzablagerungen, die sich aus der Umgebung der Umlenkrolle in dem Fett ablagern können. Dies führt zu einer höheren Reibung des Lagers, so dass die Umlenkrolle nicht optimal funktioniert und im schlimmsten Falle auch eine Schädigung des Lagers, insbesondere der Lagerringe eintreten kann. Um sowohl das Abtropfen von Fett als auch das Eindringen von Schmutz zu verhindern, werden im Stand der Technik bereits Verschlusskappen verwendet, welche mit ihrem radial inneren Randbereich in einem Verbindungsbereich der Achse und mit ihrem radial äußeren Randbereich in einem Verbindungsbereich des Rades angeordnet sind. Dabei umschließt die Verschlusskappe sowohl die Bohrung der Umlenkrolle als auch das eingesetzte Lager. Diese Verschlusskappen ermöglichen es dem Anwender, das Lager auch nach der Installation der Umlenkrolle zu fetten und regelmäßig - im Rahmen eines Wartungsvorganges - Fett nachzufüllen.

Nachteilig bei den im Stand der Technik bekannten Verschlusskappen ist, dass im Falle einer Überfüllung des Lagers mit Fett eine Verschlusskappe abspringen kann und das Fett ungehindert austritt und dabei eine Verschmutzung der Umgebung mit Fett verursacht. Ein gleiches Problem entsteht ebenfalls, wenn sich das Fett aufgrund einer Erwärmung des Lagers ausdehnt und somit einen erhöhten Druck zwischen den Verschlusskappen verursacht. Die im Stand der Technik bekannte Anbringung der Verschlusskappen an das Umlenkrad hat bisher nicht zum Erfolg geführt, da die Verschlusskappen mittels separater Befestigungsmittel an dem Rad angebracht werden und sich in Folge einer stetigen Beanspruchung und insbesondere Vibration der Umlenkrolle lösen können und somit eine nachteilige Geräuschkulisse verursachen. Zudem entstehen durch den Einsatz separater Befestigungsmittel höhere Kosten und ein erhöhter Installationsaufwand.

Desweiteren existieren im Stand der Technik auch geschlossene Lager, bei welchen ein späteres Einbringen von Fett gar nicht mehr möglich ist. Daher entstehen bei diesen Lagern Probleme in Bezug auf eine Alterung des Fetts.

Es ist daher **Aufgabe** der vorliegenden Erfindung, eine Umlenkrolle mit einer Verschlusskappe zu schaffen, bei welcher die vorgenannten Nachteile in Bezug auf unkontrollierten Fettaustritt aus dem Lager und erhöhten Aufwand bei der Installation der Verschlusskappe an der Umlenkrolle vermieden werden.

Zur **Lösung** dieser Aufgabe schlägt die Erfindung eine Umlenkrolle vor, bei welcher der radial äußere Randbereich der Verschlusskappe und der Verbindungsbereich des Rades so zueinander formschlüssig korrespondierend ausgebildet sind, dass diese nach Art einer Schnappverbindung relativ zueinander fixierbar sind. Durch die erfindungsgemäße Ausgestaltung der Verschlusskappe und des Verbindungsbereiches des Rades lässt sich somit eine stabile und dauerhafte Anbringung der Verschlusskappe an dem Rad erreichen. Der Einsatz zusätzlicher Befestigungsmittel ist überflüssig, so dass diese Befestigungsmittel nicht durch Vibrationen gelöst werden können und verloren gehen oder gar Geräusche verursachen. Durch die formschlüssige Verbindung ist weiterhin auch vorteilhaft ein Fettverlust entlang des radial äußeren Randbereiches der Verschlusskappe verhindert.

Eine Ausgestaltung der Erfindung sieht dabei vor, dass die Verschlusskappe im radial äußeren Randbereich zumindest in einem oder mehreren Teilbereichen einen Vorsprung aufweist, welcher hinter einen Absatz, insbesondere in eine Nut, des Verbindungsbereiches des Rades schnappbar ist. Durch das Schnappen des Vorsprunges der Verschlusskappe hinter einen Absatz bzw. eine Nut, welche im Verbindungsbereich des Rades angeordnet ist, wird der Verlust der Verschlusskappe wirksam verhindert. Ebenfalls können durch diese Ausgestaltung sowohl die Verschlusskappe mit dem Vorsprung als auch der Absatz bzw. die Nut mit dem Verbindungsbereich des Rades einstückig und aus einem Material ausgebildet werden.

Vorteilhaft ist der Verbindungsbereich des Rades in radial nach außen weisender Richtung hinter dem Lager angeordnet. Gemäß dieser Ausgestaltung erstreckt sich die Verschlusskappe stirnseitig über die gesamte Stirnfläche der Achse und über die gesamte Stirnfläche des Lagers. Dadurch wird das in das Lager eingebrachte Fett zuverlässig von der Verschlusskappe an einem Austreten gehindert.

Vorteilhaft weist die Verschlusskappe einen Kunststoff, insbesondere Polyamid, auf. Besonders bevorzugt ist die Verschlusskappe dabei im radial äußeren Randbereich elastisch. Durch die Herstellung der Verschlusskappe aus einem elastischen Kunststoff wird das Einschnappen des Vorsprunges der Verschlusskappe hinter den Absatz bzw. in die Nut des Verbindungsbereiches des Rades ermöglicht. Ebenso besitzt die Verschlusskappe durch eine Ausbildung aus elastischem Kunststoff eine erhöhte verschleißfeste Dichtwirkung zum Verbindungsbereich des Rades. Polyamid ist im Übrigen aufgrund seiner Verschleißfestigkeit bevorzugt. Es wird dadurch eine lange Standfestigkeit und Haltbarkeit erreicht, insbesondere auch mit Blick auf den Kontaktbereich zur Achse.

Die Erfindung sieht weiterhin vor, dass die Verschlusskappe an dem radial inneren Randbereich eine Dichtung aufweist. Diese Dichtung kann ebenfalls einteilig mit der Verschlusskappe ausgebildet sein und verhindert im "Normalbetrieb" der Umlenkrolle ein Austreten von Fett zwischen der Verschlusskappe und dem Verbindungsbereich des Rades. Die Dichtung an dem radial inneren Randbereich der Verschlusskappe verhindert darüber hinaus wirksam das Eindringen von Staub und Schmutz in den Bereich des Lagers. Für den Fall, dass das Volumen des Fettes innerhalb des Lagers über ein zulässiges Maß hinaus ansteigt, beispielsweise in Folge einer Erwärmung des Lagers oder in Folge einer Überfüllung mit Fett, erlaubt die Dichtung ein kontrolliertes Austreten des Fettes aus der Umlenkrolle in den Bereich zwischen der Achse und dem radial inneren Randbereich der Verschlusskappe.

Eine weitere Ausführung der Erfindung sieht vor, dass die Verschlusskappe stirnseitig einen Schmiernippel aufweist. Über diesen Schmiernippel lässt sich gezielt Fett in den Bereich des Lagers der Umlenkrolle einbringen ohne die Verschlusskappe lösen zu müssen.

Vorteilhaft ist der Schmiernippel in montiertem Zustand der Verschlusskappe im Bereich des Lagers angeordnet. Dadurch ergibt sich der Vorteil, dass selbst auch kleine Volumina Fett direkt in das Lager eingebracht werden können. Im Gegensatz zum Stand der Technik wird das Fett dabei nicht über eine Fettzuflussbohrung im Rad bzw. der Achse in großen Mengen in den Bereich des Lagers geleitet, wobei eine vollständige Füllung des Lagers an einem Austritt von Fett zwischen Achse und Verschlusskappe bzw. zwischen Verschlusskappe und Rad erkennbar ist. Vielmehr wird das Fett gezielt durch den entsprechend platzierten Schmiernippel direkt in den Bereich des Lagers, insbesondere in den Bereich der Kugeln eines Kugellagers, gegeben, so dass die zugeführten Fettmengen entsprechend geringer ausfallen können. Im Gegensatz zum Stand der Technik ist somit nur noch eine Fettmenge von ca. einem Drittel der früheren Menge notwendig.

In Kombination dazu kann die Achse eine Entlüftungsbohrung aufweisen, welche sich von einem Bereich auf der Umfangsfläche der Achse zu einem Bereich auf einer Stirnseite der Achse erstreckt. Die von dem zugeleiteten Fett verdrängte Luftmenge kann somit bequem über die Entlüftungsbohrung entweichen. Damit wird ein unkontrolliertes Austreten von Fett aufgrund eines im Lager auftretenden Überdrucks wirksam verhindert.

In einer alternativen Ausgestaltung der Erfindung weist die Umlenkrolle eine Fettzuflussbohrung auf, welche sich von einem Teilbereich des Lagers, vorzugsweise mit einem Winkel von 30° bis 60° zur Achse, zu einer Stirnseite des Rades erstreckt. Durch diese Fettzuflussbohrung kann Fett in das Lager gegeben werden. Im Gegensatz zum Stand der Technik wird diese Zuflussbohrung jedoch mit der erfindungsgemäßen Verschlusskappe kombiniert, wobei das Fett durch die Fettzuflussbohrung in das Lager gelangt und die verdrängte Luftmenge durch ein Entlüftungsventil in der Verschlusskappe entweichen kann.

Ausführungsbeispiele der Erfindung werden im Folgenden anhand der Figuren näher erläutert. Es zeigen:
Fig. 1: eine erfindungsgemäße Umlenkrolle in einer Schnittdarstellung,
Fig. 2: die Umlenkrolle in einer stirnseitigen Ansicht,
Fig. 3: eine dreidimensionale Seitenansicht der Umlenkrolle,
Fig. 4: eine Umlenkrolle in einer Schnittdarstellung,
Fig. 5: eine vergrößerte Detailansicht der Umlenkrolle gemäß Fig. 4,
Fig. 6: eine Achse in dreidimensionaler Seitenansicht,
Fig. 7: die Achse gemäß Fig. 6 in einer Schnittdarstellung,
Fig. 8: eine erfindungsgemäße Verschlusskappe in stirnseitiger Ansicht,
Fig. 9: die Verschlusskappe gemäß Fig. 8 in geschnittener Seitenansicht.

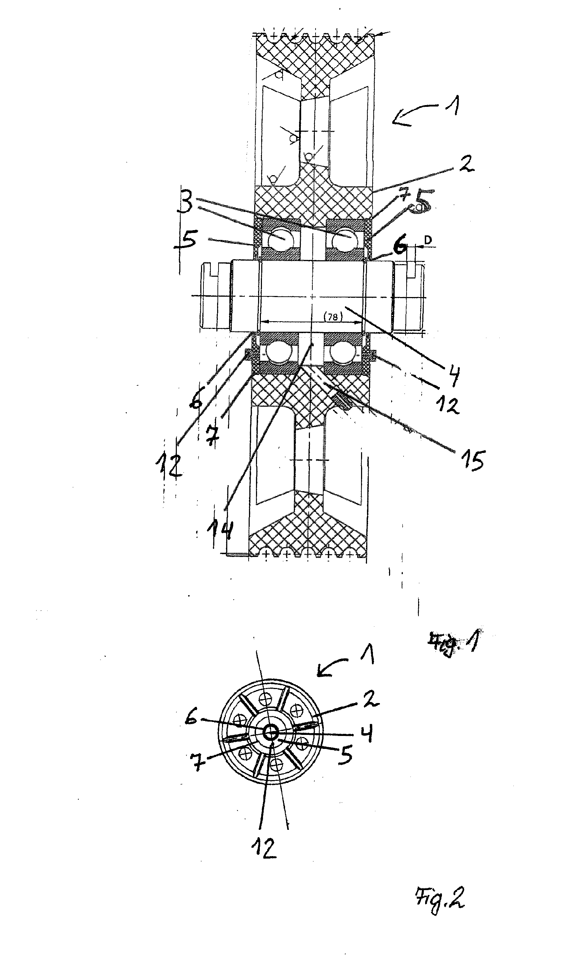

In Fig. 1 ist eine erfindungsgemäße Umlenkrolle 1 gezeigt, welche ein Rad 2, zwei Lager 3 und eine Achse 4 aufweist. Das Rad 2 ist dabei mittels der beiden parallel zueinander angeordneten und durch einen Absatz 14 getrennten Lager 3 auf der Achse 4 gelagert. Die Lager 3 sind dabei als Kugellager ausgebildet und sind unabhängig voneinander beweglich. Auf den beiden Stirnseiten der Umlenkrolle 1 ist jeweils eine Verschlusskappe 5 angeordnet, welche mit einem radial inneren Bereich 6 in einem Verbindungsbereich der Achse 4 angeordnet ist und mit einem radial äußeren Randbereich 7 in einem Verbindungsbereich des Rades 2 angeordnet ist. Die Verschlusskappe 5 weist dabei zur Verbindung mit dem Rad 2 der Umlenkrolle 1 einen (in Fig. 1 nicht näher dargestellten) Vorsprung 8 auf, welcher hinter einen Absatz 9 bzw. in eine Nut 10 des Verbindungsbereiches des Rades 2 eingeschnappt ist. Auf der Verschlusskappe 5 befindet sich stirnseitig ein Verschlusselement 12. Da die Umlenkrolle 1 gemäß Fig. 1 zwei unabhängige, parallel zueinander angeordnete Lager 3 aufweist, verfügt jeder Stirnbereich der Umlenkrolle 1 über eine Verschlusskappe 5 mit einem Verschlusselement 12. Die Verschlusskappe 5 ist mittels einer Dichtung 11 an ihrem radial inneren Randbereich 6 gegenüber der Achse 4 abgedichtet. Zusätzlich verfügt die Umlenkrolle 1 über eine Fettzuflussbohrung 15, welche sich von einem Teilbereich des Lagers 3 in einem Winkel von ca. 45° zur Längserstreckung der Achse 4, zu einer Stirnseite des Rades 2 erstreckt.

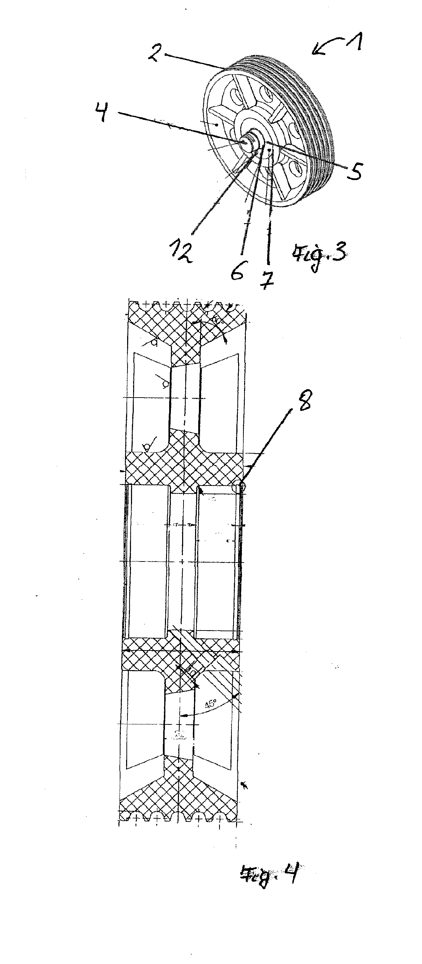

Fig. 2 zeigt die Umlenkrolle 1 gemäß Fig. 1 in einer stirnseitigen Ansicht. Erkennbar sind dabei das Rad 2, die Achse 4 und die Verschlusskappe 5 mit dem Verschlusselement 12. Fig. 3 zeigt ebenfalls die Umlenkrolle 1 gemäß den Fign. 1 und 2, wobei die ringförmige Ausbildung der Verschlusskappe 5 zwischen dem Rad 2 und der Achse 4 gut erkennbar ist. Das Verschlusselement 12 befindet sich dabei in einem radialen Bereich der Verschlusskappe 5, hinter welchem das Lager 3 (in Fig. 3 nicht dargestellt) angeordnet ist.

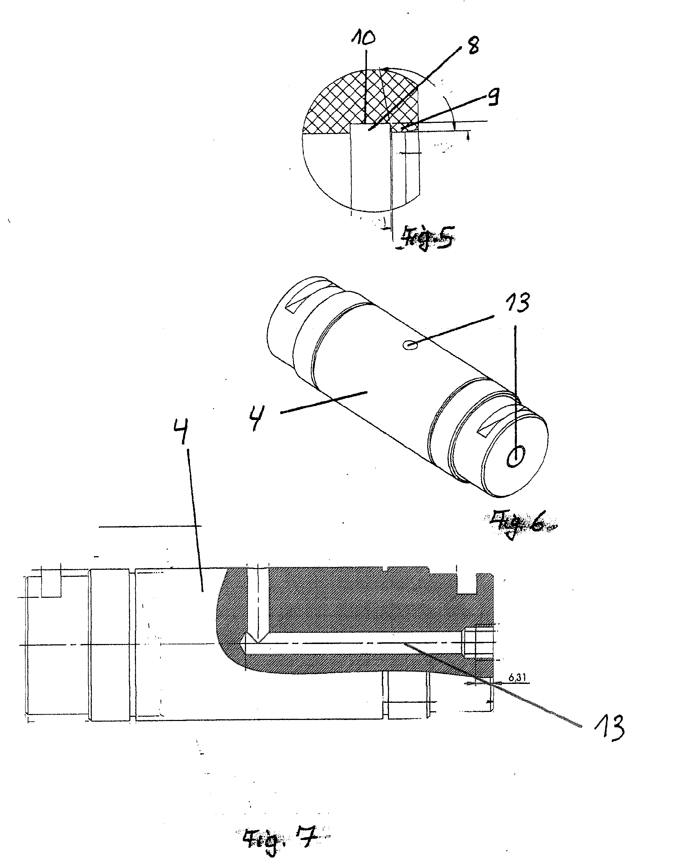

Die Fign. 4 und 5 zeigen ebenfalls eine Darstellung der Umlenkrolle 1, wobei in der Detailansicht gemäß Fig. 5 der Übergangsbereich zwischen dem radial äußeren Randbereich 7 der Verschlusskappe 5 und dem Verbindungsbereich des Rades 2 vergrößert dargestellt ist. Zur Verbindung der Verschlusskappe 5 mit dem Rad 2 ist dabei ein an dem radial äußeren Randbereich 7 der Verschlusskappe 5 angeordneter Vorsprung 8 hinter einem Absatz 9 in eine Nut 10 des Verbindungsbereiches des Rades 2 eingeschnappt. Sowohl der Vorsprung 8 als auch der Absatz 9 bzw. die Nut 10 sind über den gesamten Umfang des Verbindungsbereiches des Rades 2 ausgebildet.

Die Fign. 6 und 7 zeigen eine Achse 4, welche eine Entlüftungsbohrung 13 aufweist, die sich von einem Bereich auf der Umfangsfläche der Achse 4 zu einem Bereich auf einer Stirnseite der Achse 4 erstreckt. Den genauen Verlauf der Entlüftungsbohrung 13 innerhalb der Achse 4 zeigt die Fig. 7. Dabei sind die Endbereiche der Entlüftungsbohrung 13 sowohl stirnseitig als auch umfangsseitig in einem mittleren Bereich angeordnet.

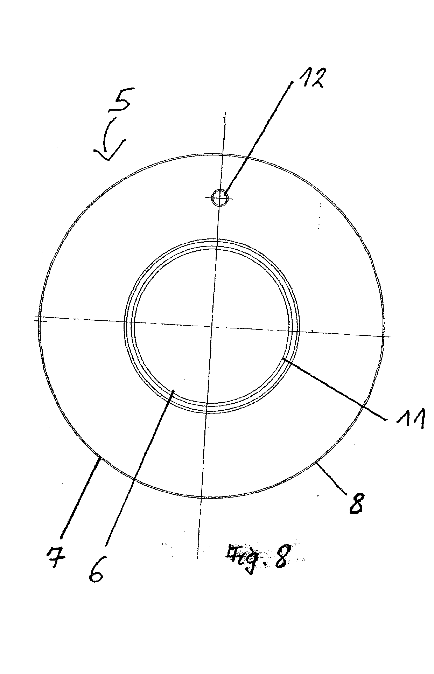

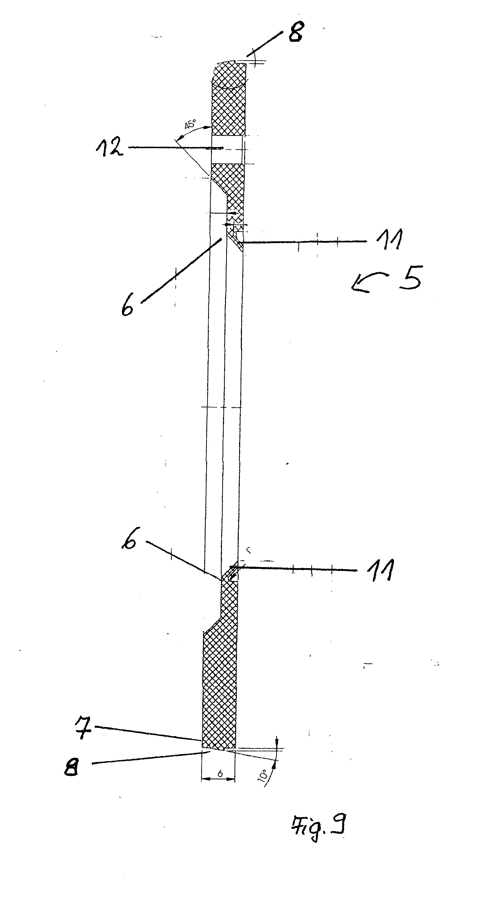

Die Fign. 8 und 9 zeigen die erfindungsgemäße Verschlusskappe 5 in einer stirnseitigen Ansicht und in einer geschnittenen Seitenansicht. Die Verschlusskappe 5 verfügt über ein Verschlusselement 12 und eine an ihrem radial inneren Randbereich 6 angeordnete Dichtung 11. In Fig. 9 ist weiterhin der Vorsprung 8 gezeigt, welcher im radial äußeren Randbereich 7 der Verschlusskappe 5 angeordnet ist. Dieser Vorsprung 8 dient der Schnappverbindung mit dem Verbindungsbereich des Rades 2. Die im radial inneren Randbereich 6 der Verschlusskappe 5 angeordnete Dichtung 11 verfügt über keilförmige Schnittflächen, mit welchen sich die Dichtwirkung der Dichtung 11 an der Achse 4 verbessern lässt.

Für ihren gewöhnlichen Einsatz, beispielsweise für den Antrieb eines Aufzuges, müssen die Lager 3 sowie die Achse 4 der Umlenkrolle 1 gemäß Fig. 1 mit Fett geschmiert werden. Zu diesem Zweck weist die Umlenkrolle 1 gemäß einer ersten Ausführungsform an beiden Stirnseiten jeweils eine Verschlusskappe 5 auf, welche über einen Schmiernippel 12 zur Einbringung von Fett in das jeweils dahinter liegende Lager 3 verfügt. Das Fett wird somit über die Schmiernippel 12 unmittelbar auf die Kugeln des Lagers 3 aufgebracht. Durch die Rotation des Lagers 3 wird das Fett gleichmäßig in dem Lager 3 und auf der Achse 4 verteilt. Durch die gezielte Einbringung nur kleiner Fettmengen direkt in das Lager kann ein Austreten von überschüssigem Fett wirksam verhindert werden. Die Entlüftung des Lagers erfolgt dabei über die Entlüftungsbohrung 13.

Des Weiteren verfügt die Verschlusskappe 5 über die in Fign. 8 und 9 dargestellte Dichtung 11, welche an dem radial inneren Randbereich 6 der Verschlusskappe 5 angeordnet ist. Über diese Dichtung 11 kann etwaiges überschüssiges Fett gezielt aus dem Lager 3 austreten.

Gemäß einer zweiten Ausführungsform der Erfindung ist alternativ eine Einbringung von Fett über die Fettzuflussbohrung 15 vorgesehen, welche sich von einer stirnseitigen Öffnung auf der Achse 4 bis zu einer Öffnung auf der Umfangsfläche der Achse 4 erstreckt. Dabei tritt das Fett durch die Fettzuflussbohrung 15 hindurch, gelangt auf die Umfangsfläche der Achse 4 und kann von dort aus die Achse 4 und auch die Lager 3 zusätzlich fetten. Die Entlüftung des Lagers bzw. ein Austritt von überschüssigem Fett erfolgt dabei über das Verschlusselement 12, welches vorteilhaft ein Entlüftungsventil ist.

Zur Montage der Verschlusskappe 5 auf der Umlenkrolle 1 wird der im radial äußeren Randbereich 7 angeordnete Vorsprung 8 hinter den Absatz 9, bzw. in die Nut 10, des Verbindungsbereiches des Rades 2 eingeschnappt. Der Vorsprung 8 erstreckt sich dabei vorteilhaft über den gesamten Umfang des radial äußeren Randbereiches 7 der Endkappe 5. Alternativ wäre es natürlich auch möglich, lediglich einen oder mehrere Teilbereiche des radial äußeren Randbereiches 7 als Vorsprung 8 auszubilden. Dadurch, dass die Verschlusskappe 5 oder zumindest der Vorsprung 8 aus einem elastischen Material, insbesondere Polyamid, ausgebildet ist, kann der Vorsprung 8 besonders einfach hinter den Absatz 9 bzw. in die Nut 10 einschnappen.

### Bezugszeichen:

- 1: Umlenkrolle
- 2: Rad
- 3: Lager
- 4: Achse
- 5: Verschlusskappe
- 6: radial innerer Randbereich
- 7: radial äußerer Randbereich
- 8: Vorsprung
- 9: Absatz
- 10: Nut
- 11: Dichtung
- 12: Verschlusselement
- 13: Entlüftungsbohrung
- 14: Absatz
- 15: Fettzuflussbohrung

## Patentansprüche

1. Umlenkrolle (1) für ein Zugmittel, mit einem Rad (2), welches mittels eines Lagers (3) auf einer Achse (4) gelagert ist, wobei die Umlenkrolle (1) an einer oder beiden Stirnseiten eine Verschlusskappe (5) aufweist, welche mit einem radial inneren Randbereich (6) in einem Verbindungsbereich der Achse (4) angeordnet ist und mit einem radial äußeren Randbereich (7) in einem Verbindungsbereich des Rades (2) angeordnet ist,
**dadurch gekennzeichnet dass**
der radial äußere Randbereich (7) der Verschlusskappe (5) und der Verbindungsbereich des Rades (2) so zueinander formschlüssig korrespondierend ausgebildet sind, dass diese nach Art einer Schnappverbindung relativ zueinander fixierbar sind.

2. Umlenkrolle (1) nach Anspruch 1, **dadurch gekennzeichnet, dass** die Verschlusskappe (5) im radial äußeren Randbereich (7) zumindest in einem oder mehreren Teilbereichen einen Vorsprung (8) aufweist, welcher hinter einen Absatz (9), insbesondere in eine Nut (10), des Verbindungsbereiches des Rades (2) schnappbar ist.

3. Umlenkrolle (1) nach Anspruch 1 oder 2, **dadurch gekennzeichnet, dass** der Verbindungsbereich des Rades (2) in radial nach außen weisender Richtung hinter dem Lager (3) angeordnet ist.

4. Umlenkrolle (1) nach einem der vorhergehenden Ansprüche, **dadurch gekennzeichnet, dass** die Verschlusskappe (5) Kunststoff, insbesondere Polyamid, aufweist.

5. Umlenkrolle (1) nach einem der vorhergehenden Ansprüche, **dadurch gekennzeichnet, dass** die Verschlusskappe (5) zumindest im radial äußeren Randbereich (7) elastisch ist.

6. Umlenkrolle (1) nach einem der vorhergehenden Ansprüche, **dadurch gekennzeichnet, dass** die Verschlusskappe (5) an dem radial inneren Randbereich (6) eine Dichtung (11) aufweist.

7. Umlenkrolle (1) nach einem der vorhergehenden Ansprüche, **dadurch gekennzeichnet, dass** die Verschlusskappe (5) stirnseitig ein Verschlusselement (12) aufweist.

8. Umlenkrolle (1) nach Anspruch 7, **dadurch gekennzeichnet, dass** das Verschlusselement (12) ein Schmiernippel ist.

9. Umlenkrolle (1) nach Anspruch 7, **dadurch gekennzeichnet, dass** das Verschlusselement (12) ein Entlüftungsventil ist.

10. Umlenkrolle (1) nach einem der vorhergehenden Ansprüche, **dadurch gekennzeichnet, dass** der Schmiernippel (12) in montiertem Zustand der Verschlusskappe (5) im Bereich des Lagers (3) angeordnet ist.

11. Umlenkrolle (1) nach einem der vorhergehenden Ansprüche, **dadurch gekennzeichnet, dass** die Achse (4) eine Entlüftungsbohrung (13) aufweist, welche sich von einem Bereich auf der Umfangsfläche der Achse (4) zu einem Bereich auf einer Stirnseite der Achse (4) erstreckt.

12. Umlenkrolle (1) nach einem der vorhergehenden Ansprüche, **dadurch gekennzeichnet, dass** das Lager (3) ein Kugellager ist.

13. Umlenkrolle (1) nach Anspruch 9, **gekennzeichnet durch** eine Fettzuflussbohrung (15), welche sich von einem Teilbereich des Lagers (3) zu einer Stirnseite des Rades (2) erstreckt.

14. Umlenkrolle (1) nach einem der vorhergehenden Ansprüche, **dadurch gekennzeichnet, dass** die Verschlusskappe (5) einteilig ausgebildet ist.

15. Umlenkrolle (1) nach einem der vorhergehenden Ansprüche, **dadurch gekennzeichnet, dass** die Verschlusskappe (5) ringförmig ausgebildet ist.
